# EUROPEAN PATENT SPECIFICATION

(11) **EP 3 040 169 B1**
(45) Date of publication and mention of the grant of the patent: **01.07.2020**
(21) Application number: 15202708.2
(22) Date of filing: 24.12.2015
(51) Int. Cl.: B25J 19/00, H02J 50/00

(54) **WIRELESS POWER SYSTEM AND METHOD FOR ELECTRIC MOTORS**
DRAHTLOSES STROMSYSTEM UND VERFAHREN FÜR ELEKTROMOTOREN
SYSTEME D'ALIMENTATION SANS FIL ET PROCEDE POUR MOTEURS ÉLECTRIQUES

(30) Priority: 05.01.2015 US 201514589169
(43) Date of publication of application: 06.07.2016
(73) Proprietor: The Boeing Company, Chicago, IL 60606-1596 (US)
(72) Inventor: OLSON, Kerri L., Chicago, IL 60606-2015 (US); TILLOTSON, Brian Jay, Chicago, IL 60606-2016 (US); ZENG, Peng, Chicago, IL 60606-2016 (US)
(74) Representative: Boult Wade Tennant LLP

(56) References cited:
- US-A1- 2011 115 303
- A Kawamura ET AL: "Wireless transmission of power and information through one high-frequency resonant AC link inverter for robot manipulator applications", IEEE Transactions on Industry Applications, 1 January 1996 (1996-01-01), pages 503-508, XP055235008, DOI: 10.1109/28.502160 Retrieved from the Internet: URL:http://ieeexplore.ieee.org/iel1/28/108 24/00502160.pdf?arnumber=502160 [retrieved on 2016-03-24]

## Description

### BACKGROUND INFORMATION

### 1. Field:

The present disclosure relates generally to electric motors, and in particular, to wireless electric motors. Still more particularly, the present disclosure relates to a method and apparatus for controlling the transmission of power to wireless electric motors using a wireless transmitter.

### 2. Background:

An electric motor is a device that converts electrical power into mechanical power. Electric motors may be used for various applications. For example, without limitation, electric motors may be used to drive fans, pumps, tools, disk drives, drills, and other types of devices. Electric motors may be used in various environments. For example, electric motors may be used for applications on various fixed and mobile platforms, such as aircraft and other vehicles.

Electric motors are used on aircraft to perform various functions on the aircraft. For example, without limitation, electric motors on an aircraft may be used to move flight control surfaces, raise and lower landing gear, and perform other functions on the aircraft.

As another example, electric motors are used in manufacturing products such as an aircraft. For example, electric motors may be used on robots such as crawlers, robotic arms, and other types of robots to perform operations to assemble the aircraft. These operations may include, for example, drilling holes, installing fasteners, and other operations used to assemble the aircraft.

In a manufacturing environment, sending power to electric motors may be more cumbersome than desired. Cables connecting electric motors to a power source may cause more issues than desired. For example, cables may become disconnected during movement of robots if the robots move farther than anticipated with respect to the length of the cables. Further, the movement or repositioning of robots may be more limited than desired when using cables.

Also, the movement of robots may result in the cables becoming twisted and including kinks that limit the movement of robots. Additionally, the cables may become frayed or develop other inconsistencies that require maintenance or replacement of the cables more frequently than desired.

In some manufacturing facilities, wireless electric motors may be used. Power is transmitted to the wireless electric motors using wireless signals. The transmission of power through wireless signals to wireless electric motors may be more challenging than anticipated or desired.

For example, environmental factors may reduce the amount of power that reaches a wireless electric motor. Changes in distance, objects that absorb or block wireless signals, and other factors may reduce the amount of power that reaches the wireless electric motor.

Therefore, it would be desirable to have a method and apparatus that take into account at least some of the issues discussed above, as well as other possible issues. For example, it would be desirable to have a method and apparatus that overcome issues in providing a desired amount of power to a wireless electric motor.

US 2011/0115303 discloses a wireless power system with a remote device with multiple wireless power inputs.

### SUMMARY

In one illustrative embodiment, a robot power system comprises a controller that receives a request for power for a group of wireless motors associated with a robot. The controller also identifies an amount of power available from a power source for wireless transmission to the group of wireless motors. Further, the controller controls operation of the robot based on the amount of power available.

In another illustrative embodiment, an apparatus comprises a transmitter system and a controller. The transmitter system sends power in wireless signals to a group of wireless motors during operation of the transmitter system. The controller receives a request for the power for the group of wireless motors. The controller also identifies an amount of power available from a power source for wireless transmission to the group of wireless motors. Further, the controller controls the operation of the transmitter system to send the power in the wireless signals to the group of wireless motors based on the amount of power available from the power source.

In yet another illustrative embodiment, a method for supplying power to a group of wireless motors is presented. A request for the power is received for the group of wireless motors associated with a robot. An amount of power available is identified from a power source for wireless transmission to the group of wireless motors. Operation of the group of wireless motors is controlled based on the amount of power available.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a wireless motor system in the form of a block diagram in accordance with an illustrative embodiment;
**Figure 2** is an illustration of a platform in the form of a block diagram in which a group of wireless motors may be located in accordance with an illustrative embodiment;
**Figure 3** is an illustration of a wireless motor system in the form of a block diagram in accordance with an illustrative embodiment;
**Figure 4** is an illustration of a message flow diagram of communications between controllers from a wireless power transmission in accordance with an illustrative embodiment;
**Figure 5** is another illustration of a message flow diagram of communications between controllers from wireless power transmission in accordance with an illustrative embodiment;
**Figure 6** is another illustration of a message flow diagram of communications between controllers from wireless power transmission in accordance with an illustrative embodiment;
**Figure 7** is an illustration of a flowchart of a process for supplying power to a group of wireless motors in accordance with an illustrative embodiment;
**Figure 8** is an illustration of a flowchart of a process for controlling operation of a group of wireless motors based on the amount of power available in accordance with an illustrative embodiment;
**Figure 9** is an illustration of a flowchart of a process for controlling operation of a group of wireless motors based on the amount of power available in accordance with an illustrative embodiment;
**Figure 10** is an illustration of a flowchart of a process for controlling operation of a group of wireless motors based on the amount of power available in accordance with an illustrative embodiment;
**Figure 11** is an illustration of a flowchart of a process for managing unrequested power received over wireless signals in accordance with an illustrative embodiment;
**Figure 12** is an illustration of a flowchart of a process for managing tasks performed by a group of wireless motors based on the amount of power available in accordance with an illustrative embodiment; and
**Figure 13** is an illustration of a block diagram of a product management system in accordance with an illustrative embodiment.

### DETAILED DESCRIPTION

The illustrative embodiments recognize and take into account one or more different considerations. For example, the illustrative embodiments recognize and take into account that sending power to wireless electric motors over wireless signals is more challenging than desired. The illustrative embodiments recognize and take into account that one potential solution may involve having a human operator check the transmitter to identify the amount of power being transmitted and check the electric motor to identify how much power is being received. The human operator may then make adjustments to the amount of power being transmitted, positioning of transmitters, tasks performed by a robot in which the electric motor is located, or some combination thereof. This process may be useful in setting up robots on the manufacturing floor. Adjustments to the tasks may be made to tasks performed by the robots. These adjustments to the tasks may change the amount of power used by electric motors. The illustrative embodiments recognize and take into account that this type of process may be more time-consuming and tedious than desired in a manufacturing environment.

Further, the illustrative embodiments recognize and take into account that changes in the positioning of those robots or other equipment may result in changes in the amount of power that actually reaches the robots containing wireless electric motors. As a result, changes in the configuration of the manufacturing floor may result in robots receiving insufficient power for the wireless electric motors. The illustrative embodiments recognize and take into account that the situation results in having to measure power being transmitted and received, taking more time and effort than desired.

The illustrative embodiments also recognize and take into account that the power source may transmit power in wireless signals at a level that is sufficient for all of the wireless electric motors operating in a manufacturing environment. For example, the power source may transmit an amount of power that is sufficient for all of the wireless electric motors with an increased amount to take into account environmental factors that may occur. This solution is inefficient with respect to the amount of power that may be wasted. Having all of the wireless electric motors operating at the same time and requiring maximum power may occur infrequently. Additionally, the cost for this type of solution may be greater than desired. The source for the power may need to be supplemented or replaced to provide a sufficient amount of power.

Thus, the illustrative embodiments provide a method and apparatus for supplying power to wireless motors. For example, a controller may receive a request for power for a group of wireless motors and identify an amount of power available from a power source for wireless transmission to the group of wireless motors. The controller may also control operation of a transmitter to send the power in wireless signals to the group of wireless motors based on the amount of power available from the power source.

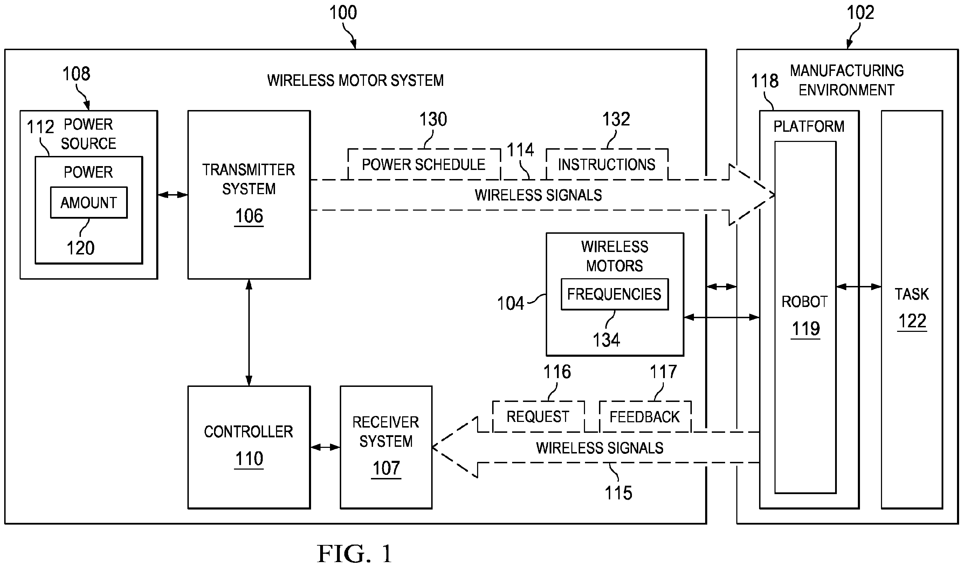

With reference now to the figures, and in particular, with reference to **Figure 1**, an illustration of a wireless motor system is depicted in accordance with an illustrative embodiment. Wireless motor system **100** is an example of an electric motor system in which an illustrative embodiment may be implemented. In this illustrative example, wireless motor system **100** is located in manufacturing environment **102** but may be implemented in other environments. For example, wireless motor system **100** may be implemented in a maintenance environment, an aircraft, a power plant, or in some other suitable environment.

In this illustrative example, wireless motor system **100** includes a number of different components. As depicted, wireless motor system **100** includes a group of wireless motors **104,** transmitter system **106**, receiver system **107**, power source **108**, and controller **110**. As used herein, "a group of," when used with reference to items, means one or more items. For example, a group of wireless motors is one or more wireless motors.

The group of wireless motors **104** is one or more physical electric motors. The group of wireless motors **104** receives power **112** from power source **108.** Power **112** is received from power source **108** without a physical connection of a cable between wireless motors **104** and power source **108.**

Transmitter system **106** is a hardware system and includes one or more transmitters. As depicted, transmitter system **106** sends power **112** in wireless signals **114** to the group of wireless motors **104** during operation of transmitter system **106.** In one illustrative example, wireless signals **114** are magnetic fields that have a frequency that oscillates in this illustrative example. The magnetic fields provide power to the group of wireless motors **104.**

The group of wireless motors **104** may receive power through wireless signals **114**, either directly, indirectly, or both directly and indirectly. For example, power **112** that is transmitted in wireless signals **114** may be directly received as magnetic fields in coils in the group of wireless motors **104.** For example, a wireless motor in the group of wireless motors **104** may have a rotor that is rotatable and comprised of a magnetic material. Coils in a stator in the wireless motor may generate a magnetic field in response to wireless signals **114.** In this manner, the coils may cause the rotor to rotate. In another illustrative example, the wireless motor may be an actuator. As an actuator, the wireless motor may make linear or rotary movement depending on the rotation.

In still another illustrative example, the group of wireless motors **104** may receive power **112** indirectly through wireless signals **114** from a receiver that generates power **112** from wireless signals **114.** For example, wireless signals **114** may be radio frequency (RF) signals. The radio frequency signals may be converted into power **112** usable by the group of wireless motors **104.** For example, the radio frequency signals may be converted into an electrical current used by the group of wireless motors **104.**

Receiver system **107** is a hardware system. Receiver system **107** includes one or more receivers. Receiver system **107** receives wireless signals **115.** Wireless signals **115** may include request **116**, feedback **117**, or other suitable information. Request **116** is a request for power **112.** Feedback **117** includes information about whether power **112** received by the group of wireless motors **104** is sufficient in this illustrative example.

Power source **108** is a hardware system and supplies power **112** sent by transmitter system **106** to the group of wireless motors **104** over wireless signals **114.** Power source **108** may be selected from at least one of a battery, an alternating current source, an auxiliary power unit, a power converter, or some other suitable power source that generates power **112.**

As used herein, the phrase "at least one of," when used with a list of items, means different combinations of one or more of the listed items may be used and only one of each item in the list may be needed. In other words, "at least one of" means any combination of items and number of items may be used from the list but not all of the items in the list are required. The item may be a particular object, thing, or a category.

For example, without limitation, "at least one of item A, item B, or item C" may include item A, item A and item B, or item B. This example also may include item A, item B, and item C or item B and item C. Of course, any combinations of these items may be present. In some illustrative examples, "at least one of" may be, for example, without limitation, two of item A; one of item B; and ten of item C; four of item B and seven of item C; or other suitable combinations.

As depicted, the group of wireless motors **104** may be associated with platform **118.** In this illustrative example, platform **118** may be robot **119.** When one component is "associated" with another component, the association is a physical association in the depicted examples. For example, a first component, the group of wireless motors **104**, may be considered to be physically associated with a second component, robot **119**, by at least one of being secured to the second component, bonded to the second component, mounted to the second component, welded to the second component, fastened to the second component, or connected to the second component in some other suitable manner. The first component also may be connected to the second component using a third component. The first component may also be considered to be physically associated with the second component by being formed as part of the second component, extension of the second component, or both.

Controller **110** manages supplying power **112** to the group of wireless motors **104.** Additionally, controller **110** also may control the operation of the group of wireless motors **104.** In particular, controller **110** may control the operation of the group of wireless motors **104** based on amount **120** of power **112** available from power source **108.**

In the illustrative example, controller **110** may be implemented in software, hardware, firmware or a combination thereof. When software is used, the operations performed by controller **110** may be implemented in program code configured to run on hardware, such as a processor unit. When firmware is used, the operations performed by controller **110** may be implemented in program code and data and stored in persistent memory to run on a processor unit. When hardware is employed, the hardware may include circuits that operate to perform the operations in controller **110.**

In the illustrative examples, the hardware may take the form of a circuit system, an integrated circuit, an application-specific integrated circuit (ASIC), a programmable logic device, or some other suitable type of hardware configured to perform a number of operations. With a programmable logic device, the device may be configured to perform the number of operations. The device may be reconfigured at a later time or may be permanently configured to perform the number of operations. Programmable logic devices include, for example, a programmable logic array, programmable array logic, a field programmable logic array, a field programmable gate array, and other suitable hardware devices. Additionally, the processes may be implemented in organic components integrated with inorganic components and may be comprised entirely of organic components excluding a human being. For example, the processes may be implemented as circuits in organic semiconductors.

During operation of wireless motor system **100**, controller **110** receives request **116** for power **112** for the group of wireless motors **104.** As depicted, request **116** is received over wireless signals **115** at receiver system **107.**

Controller **110** identifies amount **120** of power **112** available from power source **108** for wireless transmission to the group of wireless motors **104.** Amount **120** of power **112** available from power source **108** may vary over time. For example, amount **120** may be less when power **112** is transmitted to other robots or devices. The transmission to other robots for devices may be wired or wireless, depending on the particular implementation.

In this illustrative example, controller **110** controls transmitter system **106.** In particular, controller **110** controls the operation of transmitter system **106** to send power **112** in wireless signals **114** to the group of wireless motors **104** based on amount **120** of power **112** available from power source **108.**

In this illustrative example, the group of wireless motors **104** is associated with platform **118.** For example, platform **118** takes the form of robot **119.** Wireless motors **104** may operate in robot **119** to perform task **122.** Task **122** may be selected from one of drilling a hole, installing fasteners, performing an inspection, applying paint, applying sealant, moving robot **119**, moving an item, moving an arm for robot **119** or some other suitable task.

As depicted, controller **110** receives request **116** for power **112** from robot **119** for the group of wireless motors **104** associated with robot **119.** In this illustrative example, request **116** may be received in wireless signals **115** from robot **119.**

In this illustrative example, request **116** for power **112** may take a number of different forms. For example, request **116** for power **112** may be selected from at least one of an identification of a task to be performed by the group of wireless motors **104** or a desired amount of power for a selected period of time.

Controller **110** identifies amount **120** of power **112** available from power source **108** for wireless transmission to the group of wireless motors **104.** Controller **110** controls the operation of robot **119** based on amount **120** of power available from power source **108.**

In controlling the operation of robot **119**, controller **110** controls the operation of transmitter system **106.** In particular, controller **110** controls the sending of power **112** in wireless signals **114** to the group of wireless motors **104** by transmitter system **106** based on amount **120** of power **112** available from power source **108.**

Additionally, controller **110** may receive feedback **117** from robot **119** over wireless signals **114.** Feedback **117** indicates whether power **112** being sent to the group of wireless motors **104** is sufficient. In response to feedback **117**, indicating that power **112** is insufficient, controller **110** may increase power **112** sent to the group of wireless motors **104** when amount **120** of power **112** available from power source **108** is sufficient to increase power **112** being sent to the group of wireless motors **104.**

In the illustrative example, controller **110** also may control the operation of robot **119** by sending power schedule **130** to robot **119.** As depicted, power schedule **130** may be sent in wireless signals **114.** Power schedule **130** indicates what power **112** is available. Power schedule **130** also may indicate at what times the amount of power **112** is available for use.

Power schedule **130** may indicate that different amounts of power **112** are available at different times or for different periods of time. The period of time is how long the amount of power is needed. The period of time also may indicate a start time for when the powers are needed in some illustrative examples.

With power schedule **130**, robot **119** may determine how to perform task **122** using the group of wireless motors **104.** For example, robot **119** may delay the performance of task **122** by a period of time until amount **120** of power **112** needed by the group of wireless motors **104** to perform task **122** is available for transmission to robot **119** from power source **108.** In another example, the amount of time needed for task **122** may be increased to take into account a slower operation of the group of wireless motors **104** based on amount **120** of power **112** available over time as indicated in power schedule **130.**

In yet another illustrative example, controller **110** may control the operation of robot **119** by changing task **122** performed by robot **119.** For example, controller **110** may send instructions **132** to robot **119** to change task **122.** Instructions **132** may be sent in wireless signals **114.** This change in task **122** is based on amount **120** of power **112** available from power source **108.**

The change in task **122** may be, for example, a change in when task **122** starts, the duration of task **122**, the operations performed in task **122**, or other suitable changes to task **122.** In some illustrative examples, the change may be to cancel task **122** for robot **119.**

In one illustrative example, controller **110** may control which ones of wireless motors **104** receive power **112** when more than one wireless motor is present in the group of wireless motors **104.** For example, the group of wireless motors **104** may have a group of frequencies **134.** Each wireless motor may have the same or different frequency from another wireless motor depending on the implementation. For example, this frequency is the frequency at which the coils in a wireless motor magnetize and cause a rotor to rotate. In this manner, controller **110** may select the group of frequencies **134** that cause desired ones of the group of wireless motors **104** to receive power **112** to operate in performing task **122.** In this manner, wireless motor system **100** may be a robot power system when the group of wireless motors **104** is used in robot **119.**

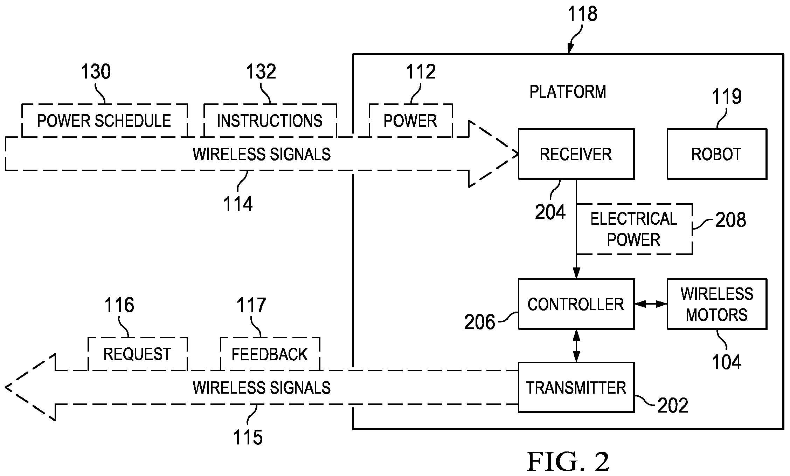

Turning next to **Figure 2****,** an illustration of a platform in which a group of wireless motors may be located is depicted in accordance with an illustrative embodiment. In this illustrative example, the group of wireless motors **104** is associated with platform **118.** In the illustrative examples, the same reference numeral may be used in more than one figure. This reuse of a reference numeral in different figures represents the same element in the different figures.

In this illustrative example, platform **118** takes the form of robot **119.** As depicted, platform **118** includes transmitter **202,** receiver **204,** controller **206,** and the group of wireless motors **104.** In this illustrative example, transmitter **202** and receiver **204** are separate components from transmitter system **106** and receiver system **107** in **Figure 1****.**

As depicted, transmitter **202** is a hardware device that transmits wireless signals **115.** Transmitter **202** may transmit information, such as, for example, request **116** for power **112,** feedback **117,** and other suitable information. Other information may be transmitted to other devices or components in addition to or in place of those in wireless motor system **100** in **Figure 1****.** For example, data, sensor information, and other suitable information may be sent.

In this illustrative example, receiver **204** is a hardware device that receives wireless signals **114** transmitted by transmitter system **106** in **Figure 1****.** Receiver **204** is a hardware device that converts wireless signals **114** into power **112** for use by the group of wireless motors **104.** In particular, receiver **204** converts wireless signals **114** into electrical power **208** used by the group of wireless motors **104.**

Additionally, receiver **204** also may receive information, such as power schedule **130,** instructions **132,** or other suitable information from controller **206.**

As depicted, controller **206** is a hardware device and may take a form similar to that of controller **110** in **Figure 1****.** As depicted, controller **206** may control distribution of electrical power **208** to the group of wireless motors **104.**

When used in robot **119**, controller **206** may have various levels of intelligence. For example, controller **206** may receive instructions specifying specific movements for robot **119**, how much electrical power **208** to send to wireless motors **104**, or other operations. With this level of intelligence, controller **206** may receive an encoder position, a distance, revolutions per minute for the group of wireless motors **104**, or other instructions on operations to perform for task **122** in **Figure 1****.** Controller **206** may be an application-specific integrated circuit (ASIC), a programmable logic array (PLA), or other suitable hardware.

In another illustrative example, controller **206** may have a higher level of intelligence. For example, controller **206** may include one or more processor units similar to those found in computer systems. A processor unit used in controller **206** may run instructions for software that may be loaded into memory in controller **206.** With this type of implementation, the processor unit may be a group of processors, a multi-processor core, or some other type of processor, depending on the particular implementation. The software may be run to perform task **122** in **Figure 1****.**

In still another illustrative example, controller **206** may implement artificial intelligence architecture. For example, controller **206** may include at least one of a neural network, natural language processing, a Bayesian network, swarm intelligence, DNA computing, or other suitable architectures or techniques.

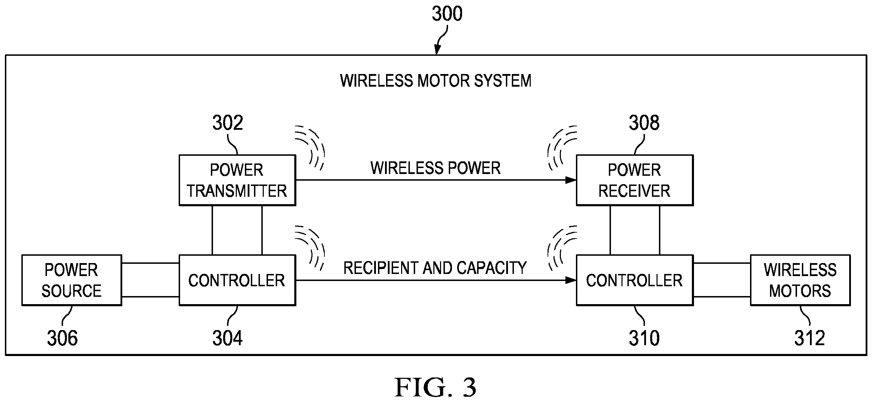

With reference now to **Figure 3****,** an illustration of a wireless motor system is depicted in accordance with an illustrative embodiment. Wireless motor system **300** is an example of one implementation for wireless motor system **100** in **Figure 1****.**

As depicted, wireless motor system **300** includes a number of different components. In this illustrative example, wireless motor system **300** includes power transmitter **302**, controller **304**, power source **306**, power receiver **308**, controller **310**, and a group of wireless motors **312**. In this illustrative example, power is supplied using power source **306**, power transmitter **302**, and controller **304.**

As depicted, controller **304** may receive a request for power from controller **310**. The request is sent over wireless signals using transmitters located in controller **304** and controller **310.** Controller **304** and controller **310** may each include a receiver and a transmitter for exchanging information over wireless signals.

In response to receiving a request for power, controller **304** may send power from power source **306** to the group of wireless motors **312** using power transmitter **302.** Power transmitter **302** sends power in wireless signals that are received by power receiver **308.** The amount of power sent in the wireless signals is based on the amount of power available from power source **306.**

Power receiver **308** receives wireless signals. In turn, power receiver **308** generates electrical power from the wireless signals received from power transmitter **302.**

Controller **304** sends a confirmation that the requested power is being sent. If the amount of power requested is not available, controller **304** may send information regarding what power is available for use by the group of wireless motors **312.** This availability may be sent by controller **304** to controller **310** in the power schedule. The power schedule indicates what amount of power is available and when the power is available. This power schedule may be used by controller **310** to adjust the operation of the group of wireless motors **312** based on what power is available from power source **306** for use by the group of wireless motors **312.**

As depicted, controller **310** sends the electrical power from power receiver **308** to the group of wireless motors **312.** Controller **310** may regulate the distribution of the electrical power generated by power receiver **308.** In particular, controller **310** may send different amounts of power for different periods of time to different wireless motors in the group of wireless motors **312.**

In another illustrative example, controller **304** may send instructions on how the power should be distributed to different wireless motors in the group of wireless motors **312.** For example, the group of wireless motors **312** may include three wireless motors. In this illustrative example, controller **310** may send 1/3 of the electrical power to the first motor in the group of wireless motors **312**; 1/2 of the electric power to a second motor in the group of wireless motors **312**, and 1/6 of the electrical power to a third motor in the group of wireless motors **312**.

Additionally, controller **310** may send power to other devices other than the group of wireless motors **312.** For example, if the group of wireless motors **312** is located in a robot, the electrical power may be sent to other devices such as sensors in the robot.

The illustration of wireless motor system **100** and the different components and implementations in **Figures 1-3** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, the group of wireless motors **104** may be used in other platforms other than robot **119.** For example, the group of wireless motors **104** may be used in different types of platforms selected from one of a mobile platform, a stationary platform, a land-based structure, an aquatic-based structure, a space-based structure, an aircraft, a surface ship, a tank, a personnel carrier, a train, a spacecraft, a space station, a satellite, a submarine, an automobile, a power plant, a bridge, a dam, a house, a maintenance facility, a building, or for some other suitable type of platform in which wireless motors may be used.

As another example, wireless motor system **100** may be used with one or more robots in addition to robot **119** in **Figure 1****.** As another example, transmitter system **106** may be distributed such that transmitters are located in different locations within manufacturing environment **102.** The distribution of transmitters may be selected to provide power **112** to any wireless electric motors that may be present in manufacturing environment **102.** The selection of locations for transmitters in transmitter system **106** may be to avoid blind spots. In other illustrative examples, an intentional blind spot may be selected to avoid a magnetically opaque object.

As another example, information, such as power schedule **130**, instructions **132**, and other information may be sent using other types of wireless signals other than wireless signals **114.** For example, if wireless signals **114** are radio frequency signals, the wireless signals used to send information may be, for example, optical signals, infrared signals, or other suitable types of signals. Also, controller **110** may be at a location selected from at least one of power source **108**, robot **119**, or a remote location.

In yet another illustrative example, the functional blocks showing that a transmitters system, a receiver system, a transmitter, a receiver, or some combination thereof may be combined into a single functional block. The single functional block may take the form of a transceiver or transceiver system that performs both transmitting and receiving wireless signals. In particular, receivers, transmitters, transceivers, and other types of hardware may be used to implement the functional blocks shown in **Figures 1-3****.**

As another example, when controller **110** is located at platform **118**, controller **206** in **Figure 2** may be omitted. As another example, one or more power sources in addition to or in place of power source **108** also may be present for providing power **112.**

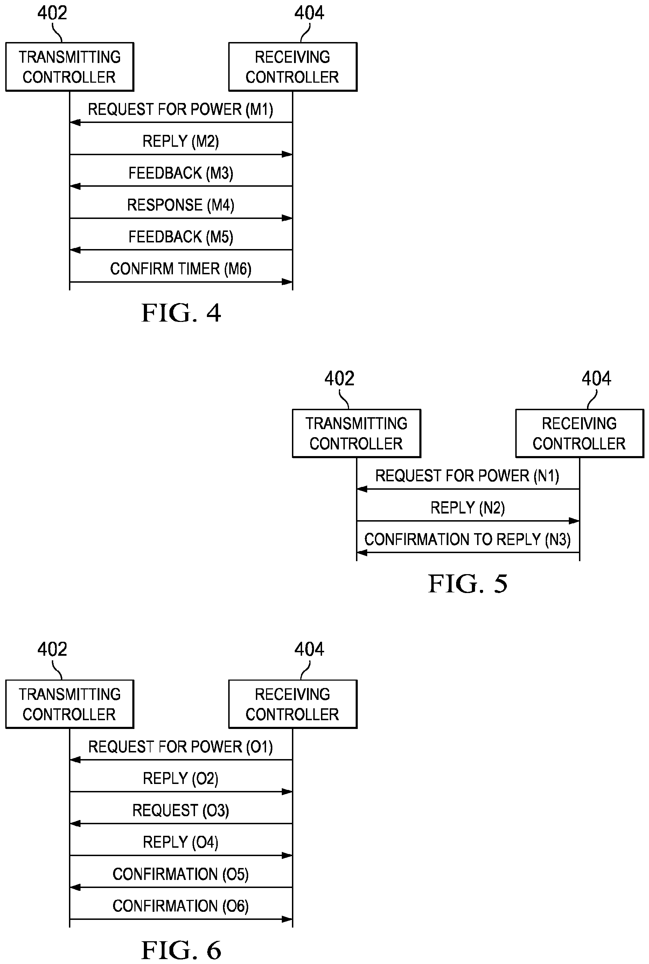

With reference now to **Figure 4****,** an illustration of a message flow diagram of communications between controllers from a wireless power transmission is depicted in accordance with an illustrative embodiment. In this illustrative example, transmitting controller **402** and receiving controller **404** communicate with each other to coordinate the transmission of wireless power. Transmitting controller **402** controls the transmission of power by a transmitter system, such as transmitter system **106** in **Figure 1** and is an example of controller **110** in **Figure 1****.** Receiving controller **404** requests power that is received by a group of wireless motors, such as the group of wireless motors **104** in **Figure 1****.** Receiving controller **404** is an example of controller **206** in **Figure 2****.**

In this message flow, receiving controller **404** sends a request for power to transmitting controller **402** (message **M1**). In message **M1,** the request for power may indicate the amount of power needed and how long the power is needed. For example, the request may be for 50 watts of power for 10 minutes.

Transmitting controller **402** sends a reply to receiving controller **404** (message **M2**). Message **M2** is a reply made in response to the request and is sent when a sufficient amount of power is available from the power source to fulfill the request for power sent in message **M1.** For example, the reply may be transmitting 50 watts of power.

In the instance in which environmental factors or other factors result in less than 50 watts of power being received, receiving controller **404** sends feedback to transmitting controller **402** indicating that insufficient power is being received (message **M3**). The feedback may be, for example, only 40 watts of power is being received and that amount power is insufficient.

Transmitting controller **402** may send more power based on the amount of power available from the power source, or perform an analysis in the illustrative example. For example, transmitting controller **402** may determine whether the reduced amount of power being received as compared to the amount of power being transmitted is a result of distance, objects, or other factors.

In an illustrative example, transmitting controller **402** determines whether additional power can be sent from the power source. Transmitting controller **402** sends a response to receiving controller **404** (message **M4**). In this example, the response may be additional power is being sent. Receiving controller **404** sends feedback to transmitting controller **402** confirming that the amount of power being received is sufficient (message **M5**). Feedback may be, for example, receiving 50 watts of power and the 10 minutes needed for the request and the period of the time for the amount of power should be based on starting at the timestamp in the message. In response, transmitting controller **402** sends a confirmation to receiving controller **404** that a timer for transmitting the power has been started (message **M6**).

With reference now to **Figure 5****,** another illustration of a message flow diagram of communications between controllers from wireless power transmission is depicted in accordance with an illustrative embodiment. In this illustrative example, a message flow between transmitting controller **402** and receiving controller **404** is depicted. In this example, the power available at the power source is insufficient for the group of wireless motors.

In this illustrative example, receiving controller **404** sends a request for power to transmitting controller **402** (message **N1).** For example, the request may be for 50 watts of power for 10 minutes.

Transmitting controller **402** identifies the amount power available is not sufficient to fulfill the request. As a result, transmitting controller **402** sends a reply to receiving controller **404** indicating the amount of power that can be supplied (message N2). For example, the reply may state that 40 watts of power is available for the requested period of time. In this example, 40 watts of power is being sent at the time message **N2** is sent to receiving controller **404.**

In response, receiving controller **404** sends a confirmation to the reply to transmitting controller **402** (message **N3**). The confirmation indicates that 40 watts of power are being received and that the period of time starts at the timestamp in the message.

With reference now to **Figure 6****,** another illustration of a message flow diagram of communications between controllers from wireless power transmission is depicted in accordance with an illustrative embodiment. In this illustrative example, a message flow between transmitting controller **402** and receiving controller **404** is depicted. In this example, the power available at the power source is insufficient for the group of wireless motors.

In this example, a request for power is received by transmitting controller **402** from receiving controller **404** (message **O1).** In this example, the request for power is for 50 watts of power for 10 minutes.

Transmitting controller **402** determines that only 40 watts of power can be transmitted instead of the requested 50 watts of power. Transmitting controller **402** sends a reply to receiving controller **404** (message **O2**). The reply indicates that only 40 watts of power can be supplied.

As depicted, receiving controller **404** sends a request for power to transmitting controller **402** (message **O3**). In this illustrative example, a new request for power is in the request. As depicted, the request for power is for 40 watts of power for five minutes and then for 50 watts of power for 10 minutes.

In response to the new request for power, transmitting controller **402** sends a reply to receiving controller **404** (message **O4**). In this example, the confirmation states that the new request can be met. The reply indicates that 40 watts of power will be sent for a period of time of 5 minutes, and 50 watts of power will be sent after five minutes for a period of time of 10 minutes. Receiving controller **404** sends a confirmation to transmitting controller **402** (message **O5**). The confirmation indicates that the 40 watts of power are being received and starting the timer should be based on the timestamp of the message. In response to receiving the confirmation from receiving controller **404,** transmitting controller **402** sends a confirmation that the timer has been started (message **O6**).

The illustration of message flow between controllers in **Figures 4-6** are not meant to limit the manner in which communications may occur within a wireless transmission system. For example, transmitting controller **402** may also communicate with other receiving controllers in addition to or in place of receiving controller **404.** When additional receiving controllers are present, transmitting controller **402** may coordinate the transmission of power to the wireless motors associated with the different receiving controllers. When more than one receiving controller is present, transmitting controller **402** may communicate with the receiving controllers using different frequencies. Each receiving controller may be assigned a different frequency from other receiving controllers to avoid overlap of communication frequencies. Other communications techniques may be used in addition to or in place of different frequencies. For example, code division multiple access (CDMA) may be used to separate communications. With code division multiple access, each receiving controller may decide particular code. As yet another example, time division multiple access (TDMA) may be used with multiple receiving controllers in which different controllers are assigned different time slots for communications. Also, the communications may be encrypted in the different illustrative examples.

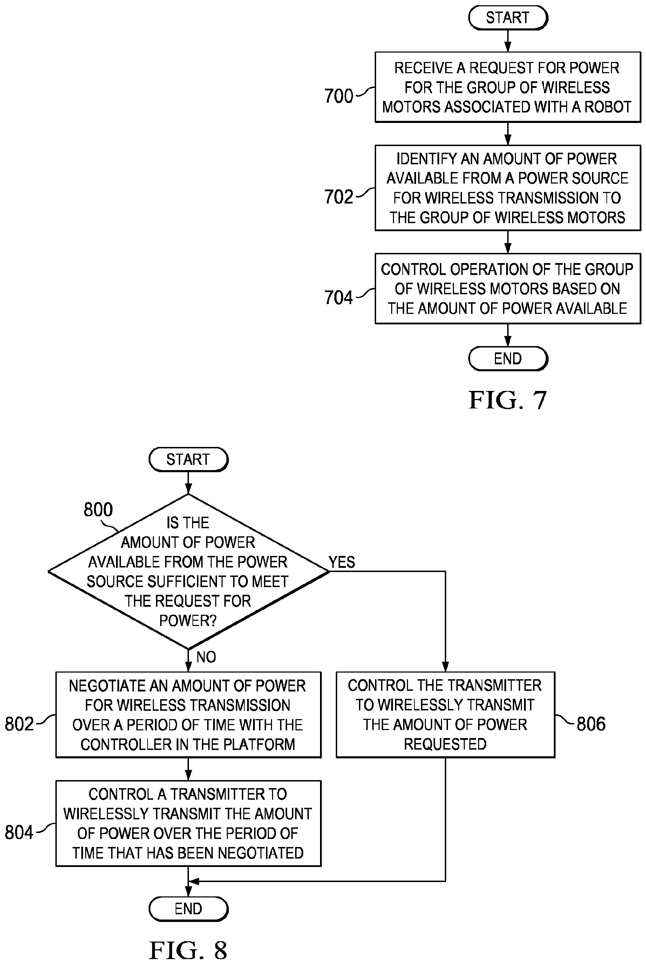

With reference now to **Figure 7****,** an illustration of a flowchart of a process for supplying power to a group of wireless motors is depicted in accordance with an illustrative embodiment. The process illustrated in **Figure 7** may be implemented in wireless motor system **100** in **Figure 1****.** One or more of the different operations may be performed by controller **110** in **Figure** 1.

The process begins by receiving a request for power for a group of wireless motors associated with a robot (operation 700). In this illustrative example, a request for power may be used to perform one or more tasks by the group of wireless motors.

The process identifies an amount of power available from a power source for wireless transmission to the group of wireless motors (operation **702**). Operation **702** may be performed in a number of different ways. For example, the total amount of power that can be generated by the power source may be compared to the power currently being drawn from the power source. That difference is the amount of power that is available for wireless transmission to the group of wireless motors. The process controls the operation of the group of wireless motors based on the amount of power available (operation **704**) with the process terminating thereafter. Operation 704 may be performed by sending the request for power over wireless signals.

In other illustrative examples, operation **704** may include additional steps such as negotiating for the amount of power needed, the time period over which the amount of power is to be transmitted, or some combination thereof. In some illustrative examples, a schedule indicating amounts of power and transmission times for those amounts power may be sent to a controller in a robot or other platform. In this manner, the controller in the platform may adjust or change the manner in which the tasks are performed.

With reference to **Figure 8****,** an illustration of a flowchart of a process for controlling operation of a group of wireless motors based on the amount of power available is depicted in accordance with an illustrative embodiment. The process illustrated in **Figure 8** is an example of an implementation for operation **704** in **Figure 7****.**

The process begins by determining whether the amount of power available from the power source is sufficient to meet the request for power (operation **800**). If the amount of power is not sufficient to meet the request, the process negotiates an amount of power for wireless transmission over a period of time with the controller in the platform (operation **802**). In operation **802**, the controller may be, for example, controller **206** in **Figure 2** or receiving controller **404** in **Figure 4****.** The process then controls a transmitter to wirelessly transmit the amount of power over the period of time that has been negotiated (operation **804**) with the process terminating thereafter.

With reference again to operation **800**, if the amount of power is sufficient to meet the request, the process controls the transmitter to wirelessly transmit the amount of power requested (operation **806**). The process terminates thereafter.

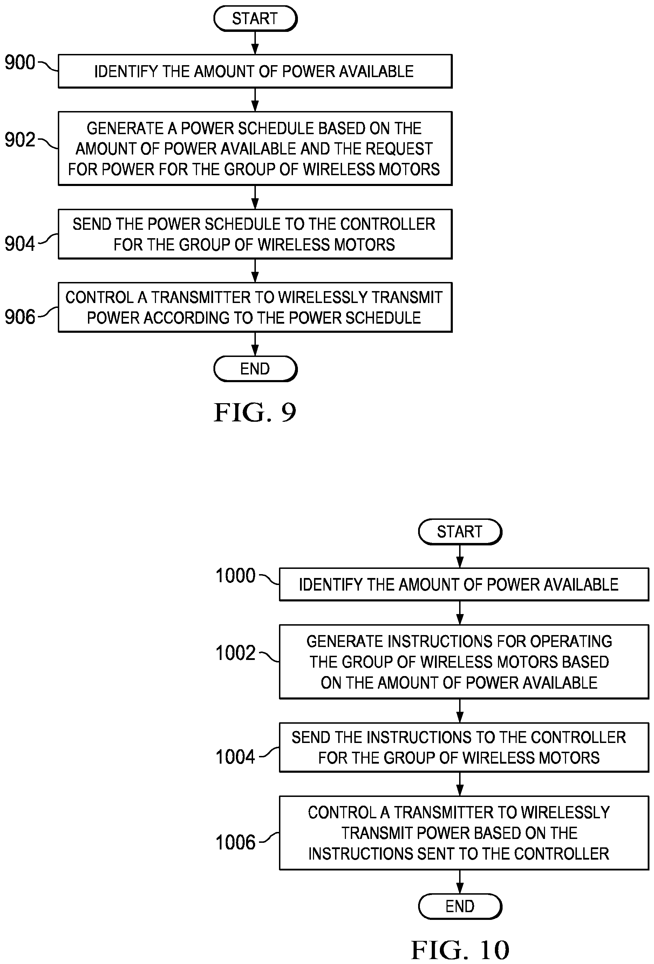

With reference to **Figure 9****,** an illustration of a flowchart of a process for controlling operation of a group of wireless motors based on the amount of power available is depicted in accordance with an illustrative embodiment. The process illustrated in **Figure 9** is an example of an implementation for operation **704** in **Figure 7****.**

The process begins by identifying the amount of power available (operation **900**). The process then generates a power schedule based on the amount of power available and the request for power for the group of wireless motors (operation **902**). The power schedule may be a level of power for a period of time that will be transmitted to the group of wireless motors. In other illustrative examples, the power schedule may include different levels of power over different periods of time.

The process sends the power schedule to the controller for the group of wireless motors (operation **904**). The process then controls a transmitter to wirelessly transmit power according to the power schedule (operation **906**) with the process terminating thereafter.

With reference to **Figure 10****,** an illustration of a flowchart of a process for controlling operation of a group of wireless motors based on the amount of power available is depicted in accordance with an illustrative embodiment. The process illustrated in **Figure 10** is an example of an implementation for operation **704** in **Figure 7**.

The process begins by identifying the amount of power available (operation **1000).** The process then generates instructions for operating the group of wireless motors based on the amount of power available (operation **1002).** These instructions may take various forms. In this illustrative example, instructions change a task performed using the group of wireless motors. The change in task may include at least one of selecting a new task, changing a duration for the task, changing a start time for the task, or some other suitable alteration of the task.

The process then sends the instructions to the controller for the group of wireless motors (operation **1004).** The process then controls a transmitter to wirelessly transmit power based on the instructions sent to the controller (operation **1006)** with the process terminating thereafter. In one illustrative example, operation **1006** may include controlling the transmitter to not wirelessly transmit power to the group of wireless motors if the task is canceled.

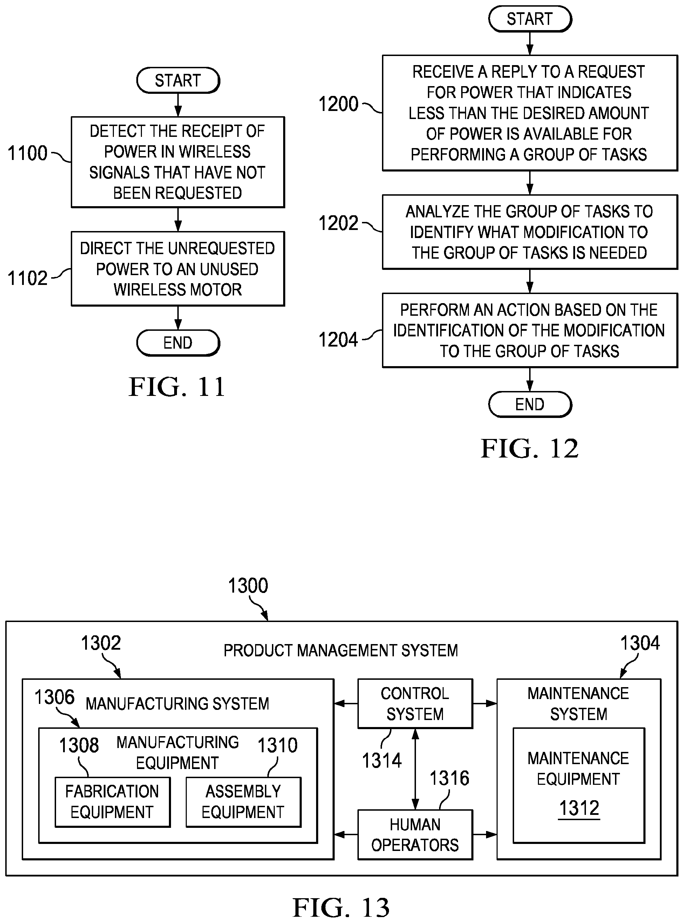

Turning next to **Figure 11**, an illustration of a flowchart of a process for managing unrequested power received over wireless signals is depicted in accordance with an illustrative embodiment. The process illustrated in **Figure 11** may be implemented by at least one of controller **110** in **Figure 1** or controller **206** in **Figure 2**. In particular, controller **110** may send instructions to controller **206.** In other illustrative examples, controller **206** performs the operations without needing instructions from controller **110.**

The process begins by detecting the receipt of power in wireless signals that have not been requested (operation **1100).** The power received in operation **1100** may be more power than requested. In another example, power may not have been requested, but received.

The process directs the unrequested power to an unused wireless motor (operation **1102**) with the process terminating thereafter. This process may be repeated as long as the unrequested power is received.

In this manner, excess power may be dissipated. In other illustrative examples, the receiver may be disconnected, wireless motors may be powered off, a battery may be charged, or other suitable actions may be taken.

With reference now to **Figure 12****,** an illustration of a flowchart of a process for managing tasks performed by a group of wireless motors based on the amount of power available is depicted in accordance with an illustrative embodiment. The process illustrated in **Figure 12** may be implemented in controller **206** in platform **118** in **Figure 2****.** The operations in this flowchart may be some operations performed as part of operation **704** in **Figure 7****.**

The process begins by receiving a reply to a request for power that indicates less than the desired amount of power is available for performing a group of tasks (operation **1200**). The process analyzes the group of tasks to identify what modification to the group of tasks is needed (operation **1202**). When a single task is present in the group tasks, the modification may be to change the task to be performed at a later time, use less power, or in some other suitable manner. When more than one task is present, the modification may include identifying which tasks may be performed with the amount of power available in the reply.

The process then performs an action based on the identification of the modification to the group of tasks (operation **1204**) with the process terminating thereafter. The action may be to initiate the change to the group of tasks. In other illustrative examples, the action may include sending an alert to a human operator in addition to or in place of initiating the action. When the alert is sent to the human operator, the human operator may select what tasks are to be performed. As another alternative, the human operator also may adjust the power available.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step. For example, one or more of the blocks may be implemented as program code, in hardware, or a combination of the program code and hardware. When implemented in hardware, the hardware may, for example, take the form of integrated circuits that are manufactured or configured to perform one or more operations in the flowcharts or block diagrams. When implemented as a combination of program code and hardware, the implementation may take the form of firmware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

Turning now to **Figure 13****,** an illustration of a block diagram of a product management system is depicted in accordance with an illustrative embodiment. Product management system **1300** is a physical hardware system. In this illustrative example, product management system **1300** may include at least one of manufacturing system **1302** or maintenance system **1304.**

Manufacturing system **1302** is configured to manufacture products, such as an aircraft. As depicted, manufacturing system **1302** includes manufacturing equipment **1306.** Manufacturing equipment **1306** includes at least one of fabrication equipment **1308** or assembly equipment **1310.** In the illustrative example, wireless motor system **100** in **Figure** 1 may be implemented in manufacturing equipment **1306.** For example, wireless motor system **100** may be used with robots or other equipment that may employ motors to perform tasks.

Fabrication equipment **1308** is equipment that may be used to fabricate components for parts used to form an aircraft. For example, fabrication equipment **1308** may include machines and tools. These machines and tools may be at least one of a drill, a hydraulic press, a furnace, a mold, a composite tape laying machine, a vacuum system, a lathe, or other suitable types of equipment. Fabrication equipment **1308** may be used to fabricate at least one of metal parts, composite parts, semiconductors, circuits, fasteners, ribs, skin panels, spars, antennas, or other suitable types of parts.

Assembly equipment **1310** is equipment used to assemble parts to form an aircraft. In particular, assembly equipment **1310** may be used to assemble components and parts to form an aircraft. Assembly equipment **1310** also may include machines and tools. These machines and tools may be at least one of a robotic arm, a crawler, a faster installation system, a rail-based drilling system, or a robot. Assembly equipment **1310** may be used to assemble parts such as seats, horizontal stabilizers, wings, engines, engine housings, landing gear systems, and other parts for an aircraft.

In this illustrative example, maintenance system **1304** includes maintenance equipment **1312.** Maintenance equipment **1312** may include any equipment needed to perform maintenance on an aircraft. In the illustrative example, wireless motor system **100** in **Figure** 1 also may be implemented in maintenance equipment **1312.** For example, wireless motor system **100** may be used with robots or other equipment that may employ motors to perform tasks.

Maintenance equipment **1312** may include tools for performing different operations on parts on an aircraft. These operations may include at least one of disassembling parts, refurbishing parts, inspecting parts, reworking parts, manufacturing placement parts, or other operations for performing maintenance on an aircraft. These operations may be for routine maintenance, inspections, upgrades, refurbishment, or other types of maintenance operations.

In the illustrative example, maintenance equipment **1312** may include ultrasonic inspection devices, x-ray imaging systems, vision systems, drills, crawlers, and other suitable devices. In some cases, maintenance equipment **1312** may include fabrication equipment **1308,** assembly equipment **1310,** or both to produce and assemble parts that may be needed for maintenance.

Product management system **1300** also includes control system **1314.** Control system **1314** is a hardware system and may also include software or other types of components. Control system **1314** is configured to control the operation of at least one of manufacturing system **1302** or maintenance system **1304.** In particular, control system **1314** may control the operation of at least one of fabrication equipment **1308,** assembly equipment **1310,** or maintenance equipment **1312.**

The hardware in control system **1314** may be using hardware that may include computers, circuits, networks, and other types of equipment. The control may take the form of direct control of manufacturing equipment **1306.** For example, robots, computer-controlled machines, and other equipment may be controlled by control system **1314.** In other illustrative examples, control system **1314** may manage operations performed by human operators **1316** in manufacturing or performing maintenance on an aircraft. For example, control system **1314** may assign tasks, provide instructions, display models, or perform other operations to manage operations performed by human operators **1316.** In these illustrative examples, controller **110** in **Figure 1** may be implemented in control system **1314** to manage at least one of the manufacturing or maintenance of an aircraft. In particular, controller **110** may be used to manage the wireless transfer of power to wireless motors that may be used in product management system **1300.**

In the different illustrative examples, human operators **1316** may operate or interact with at least one of manufacturing equipment **1306,** maintenance equipment **1312,** or control system **1314.** This interaction may be performed to manufacture an aircraft.

Of course, product management system **1300** may be configured to manage other products other than an aircraft. Although product management system **1300** has been described with respect to manufacturing in the aerospace industry, product management system **1300** may be configured to manage products for other industries. For example, product management system **1300** may be configured to manufacture products for the automotive industry as well as any other suitable industries.

Thus, with one or more illustrative embodiments, different operations such as manufacturing and maintenance of products may be performed more efficiently. For example, the number of wires may be reduced through the use of wireless motors. As a result, maintenance needed to refurbish, replace, or untwist cables carrying power may be reduced.

Additionally, wireless motor system 100 in **Figure 1** may be used to supply power to wireless motors more efficiently. With the use of wireless motor system **100**, the amount of power that is wirelessly transmitted may be closer to what is needed by the wireless motors as compared to currently used systems. As a result, greater efficiency in the use of power may occur. In this manner, the cost for manufacturing and maintenance of products may be reduced.

With wireless motor system **100**, multiple platforms, such as robots, may be powered with less time, effort, and maintenance, as compared to currently used electric motor power systems. For example, issues with wires were avoided with wireless motor system **100.** Further, managing the supply of power to wireless motors may be performed in a manner that reduces the amount of monitoring and adjustments needed by human operators.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component may be configured to perform the action or operation described. For example, the component may have a configuration or design for a structure that provides the component an ability to perform the action or operation that is described in the illustrative examples as being performed by the component.

## Claims

1. A robot power system comprising:
a controller (110) configured to:
receive a request (116) for power (112) for a group of wireless motors (104) associated with a robot (119);
identify an amount (120) of power (112) available from a power source (108) for wireless transmission to the group of wireless motors (104); and
control operation of the robot (119) based on the amount (120) of power (112) available
wherein controlling operation of the robot comprises one or more of:
sending a power schedule (130) to the robot (119);
changing a task (122) performed by the robot (119).

2. The robot power system of claim 1 further comprising:
a transmitter system (106) that is configured to send the power (112) in wireless signals (114) to the group of wireless motors (104) during the operation of the transmitter system (106).

3. The robot power system of claim 2, wherein in controlling the operation of the robot (119), the controller (110) is configured to control the operation of the transmitter system (106) to send the power (112) in wireless signals (114) to the group of wireless motors (104) based on the amount (120) of power (112) available from the power source (108).

4. The robot power system of any one of claims 2 to 3, wherein the controller (110) is configured to receive feedback (117) from the robot (119) indicating the power (112) being sent to the group of wireless motors (104) is insufficient and is further configured to increase the power (112) sent to the group of wireless motors (104) when the amount (120) of power (112) available from the power source (108) is sufficient to increase the power (112) being sent to the group of wireless motors (104).

5. The robot power system of any one of claims 1 to 4, wherein the request (116) for the power (112) is selected from at least one of an identification of a task (122) to be performed by the group of wireless motors (104) or a desired amount (120) of power (112) for a selected period of time.

6. The robot power system of any one of claims 1 to 5, wherein the task (122) is selected from one of drilling a hole, applying sealant, applying paint, installing fasteners, performing an inspection, moving the robot (119), and moving an arm for the robot (119).

7. The robot power system of any one of claims 1 to 6, wherein the controller (110) is located at a location selected from at least one of a power source (108), the robot (119), or a remote location.

8. A method for supplying power (112) to a group of wireless motors (104), the method comprising:
receiving a request (116) for the power (112) for the group of wireless motors (104) associated with a robot (119);
identifying an amount (120) of power (112) available from a power source (108) for wireless transmission to the group of wireless motors (104); and
controlling operation of the group of wireless motors (104) based on the amount (120) of power (112) available
wherein the controlling step comprises one or more of:
sending a power schedule (130) to the robot (119);
changing a task (122) performed by the robot (119).

9. The method of claim 8, wherein controlling the operation of the group of wireless motors (104) based on the amount (120) of power (112) available comprises:
sending the power (112) in wireless signals (114) to the group of wireless motors (104) based on the amount (120) of power (112) available from the power source (108).

10. The method of claim 9 further comprising:
receiving feedback (117) from the robot (119) indicating the power (112) being sent to the group of wireless motors (104) is insufficient; and
increasing the power (112) sent to the group of wireless motors (104) when the amount (120) of power (112) available from the power source (108) is sufficient to increase the power (112) being sent to the group of wireless motors (104).

11. The method of any one of claims 8 to 10, wherein the request (116) for the power (112) is selected from at least one of an identification of the task (122) to be performed by the group of wireless motors (104) or a desired amount (120) of power (112) for a selected period of time.

12. The method of any one of claims 8 to 10, wherein the receiving, identifying, and controlling steps are performed by a controller (110) located at a location selected from at least one of a power source (108), the robot (119), or a remote location.

## Patentansprüche

1. Roboterenergiesystem, umfassend:
einer Steuerung (110), die konfiguriert ist, um:
eine Anfrage (116) nach Energie (112) für eine Gruppe von drahtlosen Motoren (104), die einem Roboter (119) zugeordnet sind, zu empfangen;
eine Menge (120) an Energie (112) zu identifizieren, die von einer Energiequelle (108) zur drahtlosen Übertragung an die Gruppe von drahtlosen Motoren (104) verfügbar ist; und
den Betrieb des Roboters (119) basierend auf der Menge (120) der verfügbaren Energie (112) zu steuern
wobei das Steuern des Betriebs des Roboters eines oder mehrere der folgenden umfasst:
Senden eines Energieplans (130) an den Roboter (119);
Ändern einer von dem Roboter (119) ausgeführten Aufgabe (122).

2. Roboterenergiesystem nach Anspruch 1, ferner umfassend:
ein Sendersystem (106), das konfiguriert ist, um während des Betriebs des Sendersystems (106) die Energie (112) in drahtlosen Signalen (114) an die Gruppe von drahtlosen Motoren (104) zu senden.

3. Roboterenergiesystem nach Anspruch 2, bei dem die Steuerung (110) konfiguriert ist, um beim Steuern des Betriebs des Roboters (119) den Betrieb des Sendersystems (106) zu steuern, um die Energie (112) in drahtlosen Signalen (114) an die Gruppe von drahtlosen Motoren (104) auf der Grundlage der Menge (120) der von der Energiequelle (108) verfügbaren Energie (112) zu senden.

4. Roboterenergiesystem nach einem der Ansprüche 2 bis 3, bei dem die Steuerung (110) konfiguriert ist, um eine Rückmeldung (117) von dem Roboter (119) zu empfangen, die anzeigt, dass die an die Gruppe der drahtlosen Motoren (104) gesendete Energie (112) unzureichend ist, und ferner konfiguriert ist, um die an die Gruppe der drahtlosen Motoren (104) gesendete Energie (112) zu steigern, wenn die Menge (120) der von der Energiequelle (108) verfügbaren Energie (112) ausreichend ist, um die an die Gruppe der drahtlosen Motoren (104) gesendete Energie (112) zu steigern.

5. Roboterenergiesystem nach einem der Ansprüche 1 bis 4, bei dem die Anfrage (116) nach der Leistung (112) aus mindestens einer Identifikation einer Aufgabe (122), die von der Gruppe drahtloser Motoren (104) ausgeführt werden soll, oder einer gewünschten Menge (120) an Energie (112) für eine ausgewählte Zeitperiode ausgewählt wird.

6. Roboterenergiesystem nach einem der Ansprüche 1 bis 5, bei dem die Aufgabe (122) ausgewählt wird aus einer der folgenden Aufgaben: Bohren eines Lochs, Auftragen von Dichtungsmittel, Auftragen von Farbe, Installieren von Befestigungsmitteln, Durchführen einer Untersuchung, Bewegen des Roboters (119) und Bewegen eines Arms für den Roboter (119).

7. Roboterenergiesystem nach einem der Ansprüche 1 bis 6, bei dem die Steuerung (110) an einem Ort angeordnet ist, der aus mindestens einem von einer Energiequelle (108), dem Roboter (119) oder einem entfernten Ort ausgewählt ist.

8. Verfahren zum Zuführen von Energie (112) zu einer Gruppe von drahtlosen Motoren (104), wobei das Verfahren umfasst:
Empfangen einer Anfrage (116) nach der Energie (112) für die Gruppe von drahtlosen Motoren (104), die einem Roboter (119) zugeordnet ist;
Identifizieren einer Menge (120) an Energie (112), die von einer Energiequelle (108) zur drahtlosen Übertragung an die Gruppe von drahtlosen Motoren (104) verfügbar ist; und
Steuern des Betriebs der Gruppe der drahtlosen Motoren (104) auf der Grundlage der Menge (120) an verfügbarer Energie (112),
wobei der Schritt des Steuerns einen oder mehrere der folgenden Schritte umfasst:
Senden eines Energieplans (130) an den Roboter (119);
Ändern einer von dem Roboter (119) ausgeführten Aufgabe (122).

9. Verfahren nach Anspruch 8, bei dem das Steuern des Betriebs der Gruppe von drahtlosen Motoren (104) auf der Grundlage der Menge (120) an verfügbarer Energie (112) umfasst:
Senden der Energie (112) in drahtlosen Signalen (114) an die Gruppe von drahtlosen Motoren (104) basierend auf der Menge (120) der von der Energiequelle (108) verfügbaren Energie (112).

10. Verfahren nach Anspruch 9, ferner umfassend:
Empfangen einer Rückmeldung (117) von dem Roboter (119), die anzeigt, dass die an die Gruppe drahtloser Motoren (104) gesendete Energie (112) unzureichend ist; und
Steigern der an die Gruppe der drahtlosen Motoren (104) gesendeten Energie (112), wenn die Menge (120) der von der Energiequelle (108) verfügbaren Energie (112) ausreichend ist, um die an die Gruppe der drahtlosen Motoren (104) gesendete Energie (112) zu steigern.

11. Verfahren nach einem der Ansprüche 8 bis 10, bei dem die Anfrage (116) nach Energie (112) ausgewählt wird aus mindestens einer Identifikation der Aufgabe (122), die von der Gruppe drahtloser Motoren (104) ausgeführt werden soll, oder einer für eine ausgewählte Zeitspanne gewünschten Menge (120) an Energie (112).

12. Verfahren nach einem der Ansprüche 8 bis 10, bei dem die Schritte des Empfangens, Identifizierens und Steuerns von einem Controller (110) ausgeführt werden, der sich an einem Ort befindet, der aus mindestens einer Energiequelle (108), dem Roboter (119) oder einem entfernten Ort ausgewählt wird.

## Revendications

1. Système d'alimentation de robot comprenant :
un dispositif de commande (110) configuré pour :
recevoir une demande (116) de puissance (112) pour un groupe de moteurs sans fil (104) associés à un robot (119) ;
identifier une quantité (120) de puissance (112) disponible à partir d'une source d'alimentation (108) pour une transmission sans fil au groupe de moteurs sans fil (104) ; et
commander le fonctionnement du robot (119) sur la base de la quantité (120) de puissance (112) disponible
dans lequel la commande du fonctionnement du robot comprend une ou plusieurs des étapes consistant à :
envoyer un programme d'alimentation (130) au robot (119) ;
changer une tâche (122) effectuée par le robot (119).

2. Système d'alimentation de robot selon la revendication 1, comprenant en outre :
un système d'émetteur (106) qui est configuré pour envoyer la puissance (112) dans des signaux sans fil (114) au groupe de moteurs sans fil (104) pendant le fonctionnement du système d'émetteur (106).

3. Système d'alimentation de robot selon la revendication 2, dans lequel lors de la commande du fonctionnement du robot (119), le dispositif de commande (110) est configuré pour commander le fonctionnement du système d'émetteur (106) afin d'envoyer la puissance (112) dans des signaux sans fil (114) au groupe de moteurs sans fil (104) sur la base de la quantité (120) de puissance (112) disponible à partir de la source d'alimentation (108).

4. Système d'alimentation de robot selon l'une quelconque des revendications 2 à 3, dans lequel le dispositif de commande (110) est configuré pour recevoir une rétroaction (117) en provenance du robot (119) indiquant que la puissance (112) envoyée au groupe de moteurs sans fil (104) est insuffisante, et est en outre configuré pour augmenter la puissance (112) envoyée au groupe de moteurs sans fil (104) lorsque la quantité (120) de puissance (112) disponible à partir de la source d'alimentation (108) est suffisante pour augmenter la puissance (112) envoyée au groupe de moteurs sans fil (104).

5. Système d'alimentation de robot selon l'une quelconque des revendications 1 à 4, dans lequel la demande (116) pour la puissance (112) est sélectionnée parmi au moins l'une d'une identification d'une tâche (122) à exécuter par le groupe de moteurs sans-fil (104) ou une quantité souhaitée (120) de puissance (112) pendant une période de temps sélectionnée.

6. Système d'alimentation de robot selon l'une quelconque des revendications 1 à 5, dans lequel la tâche (122) est choisie parmi l'une des étapes consistant à percer un trou, appliquer un agent d'étanchéité, appliquer de la peinture, installer des fixations, effectuer une inspection, déplacer le robot (119), et déplacer un bras pour le robot (119) .

7. Système d'alimentation de robot selon l'une quelconque des revendications 1 à 6, dans lequel le dispositif de commande (110) est situé à un emplacement sélectionné parmi au moins l'un d'une source d'alimentation (108), du robot (119) ou d'un emplacement distant.

8. Procédé pour fournir de la puissance (112) à un groupe de moteurs sans fil (104), le procédé comprenant les étapes consistant à :
recevoir une demande (116) de puissance (112) pour le groupe de moteurs sans fil (104) associés à un robot (119) ;
identifier une quantité (120) de puissance (112) disponible à partir d'une source d'alimentation (108) pour une transmission sans fil au groupe de moteurs sans fil (104) ; et
commander le fonctionnement du groupe de moteurs sans fil (104) sur la base de la quantité (120) de puissance (112) disponible
dans lequel l'étape de commande comprend une ou plusieurs étapes parmi :
envoyer un programme d'alimentation (130) au robot (119) ;
changer une tâche (122) effectuée par le robot (119).

9. Procédé selon la revendication 8, dans lequel la commande du fonctionnement du groupe de moteurs sans fil (104) sur la base de la quantité (120) de puissance (112) disponible comprend l'étape consistant à :
envoyer la puissance (112) dans des signaux sans fil (114) au groupe de moteurs sans fil (104) sur la base de la quantité (120) de puissance (112) disponible à partir de la source d'alimentation (108).

10. Procédé selon la revendication 9, comprenant en outre les étapes consistant à :
recevoir une rétroaction (117) à partir du robot (119) indiquant que la puissance (112) envoyée au groupe de moteurs sans fil (104) est insuffisante ; et
augmenter la puissance (112) envoyée au groupe de moteurs sans fil (104) lorsque la quantité (120) de puissance (112) disponible à partir de la source d'alimentation (108) est suffisante pour augmenter la puissance (112) d'être envoyée au groupe de moteurs sans fil (104).

11. Procédé selon l'une quelconque des revendications 8 à 10, dans lequel la demande (116) pour la puissance (112) est sélectionnée parmi au moins l'une d'une identification de la tâche (122) à exécuter par le groupe de moteurs sans fil (104) ou d'une quantité souhaitée (120) de puissance (112) pendant une période de temps sélectionnée.

12. Procédé selon l'une quelconque des revendications 8 à 10, dans lequel les étapes de réception, d'identification et de commande sont effectuées par un dispositif de commande (110) situé à un emplacement sélectionné parmi au moins l'un d'une source d'alimentation (108), du robot (119), ou d'un emplacement distant.
